# EUROPEAN PATENT APPLICATION

(11) **EP 4 779 224 A1**
(43) Date of publication of application: **22.07.2026**
(21) Application number: 25152360.1
(22) Date of filing: 16.01.2025
(51) Int. Cl.: F24F 12/00, F24F 13/20, F24F 13/28, F24F 13/30

(54) **HEAT EXCHANGER SYSTEM WITH A MULTIFUNCTIONAL FIXATION ELEMENT**

(71) Applicant: Ubbink B.V., 6984 AA Doesburg (NL)
(72) Inventor: BRAAD, Jan Henk, 6984 AA Doesburg (NL)
(74) Representative: van Dam, Vincent

(57) **Abstract**

The present invention relates to a heat exchanger system comprising a multifunctional fixation element, in particular a heat exchanger system for use in a building ventilation system in a building.

## Description

The present invention relates to a heat exchanger system comprising a multifunctional fixation element, in particular a heat exchanger system for use in a building ventilation system in a building.

Heat exchanger systems and building ventilation systems incorporating said heat exchanger systems are used to recover heat from air extracted from an inner space of a building by transferring heat from the extract air to outdoor air that is introduced into the building. In this respect, such heat exchanger systems are also referred to heat recovery systems.

The action of such systems is typically based on a heat exchanger unit installed at a crossing point of a first and second air passage which both have an air inlet and air outlet and which are configured in such a relation with the heat exchanger unit that the first and second air passage are in a heat exchanging relation with each other.

Typically, heat exchange systems used in this context comprise a bypass in the air flow passage between the extract air connection and the exhaust air connection to allow the extract air to bypass the heat exchanger unit. In general, this bypass functions as a means to provide natural air flow between the inside and outside of a building, basically functioning similar as opening a window.

It is crucial for functioning of a ventilation system that it is well-maintained.

The ventilation fans of the heat exchanger systems in the context of the present invention are crucial for the provision of adequate air flow in order to achieve the desired heat exchange, and, optionally, also for providing air flow through the bypass. They ensure proper flow in air entering and exiting the building in which the ventilation system is installed.

In order to provide the necessary maintenance service to the ventilation fans it is important that the fans can be removed and placed back in the heat exchanger system when needed.

In order to ensure efficient and error-free maintenance, there is a need for systems where components requiring maintenance, such as these fans, can be installed and replaced as easily and foolproof as possible.

### Summary of the invention

The present invention aims to provide a heat exchange system comprising wherein the ventilation fans comprised therein can be installed and replaced in a very easy manner, so that maintenance can be performed without extensive knowledge of the system, without the requirement for extensive training of maintenance personnel.

In order to achieve this, the invention relates to a heat exchanger system, comprising a housing comprising accommodated therein: a heat exchanger unit installed at a crossing point of a first and second air flow passage which both have an air inlet and air outlet and which are configured in such a relation with the heat exchanger unit that the first and second air flow passage are in a heat exchanging relation with each other; a first fan for effecting air flow through the first air flow passage; a second fan for effecting air flow through the second air flow passage; wherein said heat exchanger unit and said first and second fans are secured in the housing by a fixation element in the form of a tray slidingly removable from a front side of the heat exchanger system, wherein said heat exchanger unit is secured in a suitable position on the tray and the outer structure of the tray is configured to secure the first and second fan in their respective positions in the housing.

### Short description of the drawings

Fig. 1A shows a perspective view from the front of an exemplary embodiment of the heat exchanger system according to the invention, wherein the front cover is removed.
Fig. 1B shows a perspective view showing the top, front and one of the side panels of the same heat exchanger system wherein the front and top cover are removed and wherein the bypass flow passage is closed.
Fig. 1C shows a perspective view showing the top, front and one of the side panels of the same heat exchanger system wherein the front and top cover are removed and wherein the bypass flow passage is open and the first airflow passage to or from the heat exchanger unit is closed
Fig. 1D shows a view from the back of the same heat exchanger system in an opened representation to show the bypass flow passage.
Fig. 2 shows a perspective view of the fixation element used in the same heat exchanger system.
Fig. 3 shows a perspective view of a cross section through a fan and the wall of the inner housing of the same heat exchanger system showing the arrangement of the fan in a recess in the wall.
Fig. 4 shows a perspective view from the front of the same heat exchanger system and shows how the fixation element clamps the fans in their positions. The heat exchanger unit is absent in this representation.

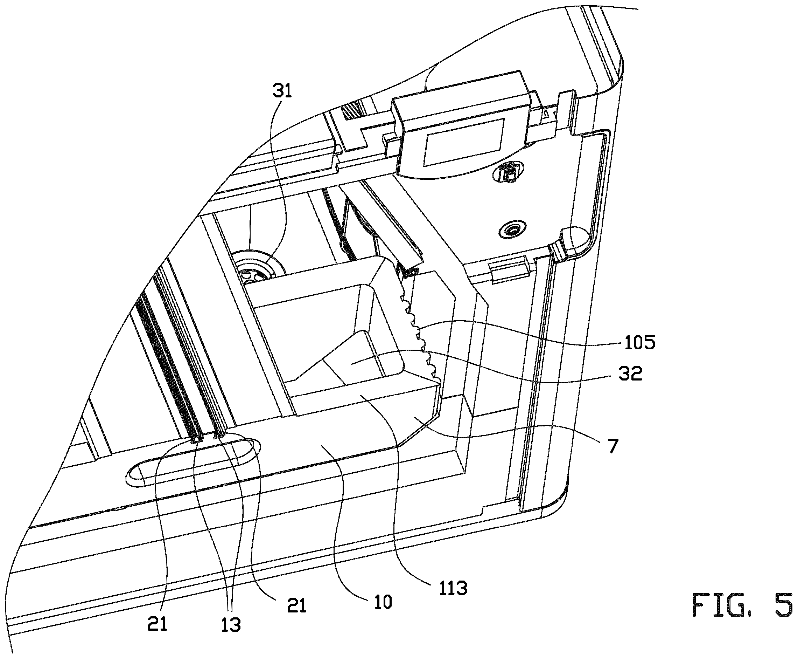

Fig. 5 shows a perspective view from the front of a part of the inside of the same heat exchanger system. The heat exchanger unit is absent in this representation.
Figs. 6 A-C show the heat exchanger system and how the heat exchanger unit and tray can be removed to allow easy access to the fans.

### Detailed description of the invention

The present invention is based on the provision of a multifunctional fixation element for a heat exchanger system. The fixation element is in the form of a tray slidingly removable from a front side of the heat exchanger system.

The heat exchanger system in the context of the present invention comprises a housing comprising accommodated therein a heat exchanger unit installed at a crossing point of a first and second air flow passage which both have an air inlet and air outlet and which are configured in such a relation with the heat exchanger unit that the first and second air flow passage are in a heat exchanging relation with each other.

The housing in this context may be configured as an inner housing which in its turn is accommodated and supported in an outer housing. In the context of the present invention, the term "wall" in relation to the housing may therefore suitably refer to the wall of such an inner housing, while the heat exchanger unit as such may further comprise one or more outer wall structures surrounding or covering the inner elements of the system such as the wall of the aforementioned inner housing.

The term heat exchanger unit relates to a unit in which heat is functionally exchanged, whereas the term heat exchanger system relates to the system in broader sense, i.e. further comprising any other functional components such as flow passages, fans, etc. It is also noted that the heat exchanger unit in this regard may comprise the functional heat exchanging components as well as any suitable structural components that can be considered as part of this unit and which may be required or desirable for installation and proper functioning in the overall heat exchanger system.

The heat exchanger system also comprises a first fan for effecting air flow through the first air flow passage and a second fan for effecting air flow through the second air flow passage. The fans are suitably positioned on both sides of the heat exchanger unit, in particular in recesses provided in the housing on opposite sides of the heat exchanger unit. The first and second fans are thus suitably provided on opposite sides of the housing on the left and right side of the heat exchanger unit as seen from the front of the heat exchanger system or, in other words, as seen from the point of insertion of the fixation element.

In a suitable embodiment, the first and second fans are centrifugal fans positioned in recesses provided in the housing on opposite sides of the heat exchanger unit. In order to secure the fans removably in a fixed position, it is preferred that the outer structure of the wall of the housing abutting the first and second fans is structured such that its structure fits the dimensions of the first and second fans so as to accommodate the first and second fans in a fixed position with regard to the direction from front to back of the heat exchanger system. This way the fans are secured in their position in the direction from front to back of the heat exchanger system, and in particular of the housing, but they can be removed from the housing for maintenance by taking them out from the recesses when they are accessible, i.e. after removal of the heat exchanger unit, by easily pulling them towards the inside of the housing.

The outer structure of the fixation element is configured to secure the first and second fan in their respective suitable positions in the housing. In case both fans are positioned on opposite sides of the heat exchanger unit, i.e. on the left and right side thereof as seen from the front of the heat exchanger system, the fixation element is configured such that the opposite sides thereof clamp the fans in their respective positions so that they are secured against movement in direction of the heat exchanger unit.

In order to provide optimal fixation of the fans in their respective positions, it may be preferred that the first and second fans comprise recessed or protruded portions configured to engage with respective recessed or protruded portions on the sides of the fixation element. In a suitable embodiment this is in the form of a ribbed structure. This provides some friction against sliding of the fixation element in the direction in and out of the housing. In other words, in this embodiment a user needs to exert some pressure to slide the fixation element in and out of the housing. A suitable material that provides a good balance between friction and ease of sliding is expanded polypropylene (EPP). It is therefore preferred that fixation element is made of EPP. This material is shock-resistant, light weight, durable and fully recyclable. In this respect EPP is also very suitable as material for the housing in which the fixation element, fans and heat exchanger unit are accommodated.

The fixation element is also configured such that said heat exchanger unit is secured in the housing by fix-ating it in a predetermined position on the element. In particular, the removable fixation element is configured such that it fixates the heat exchanger unit that is housed inside the housing of the heat exchanger system between the tray and the top portion of the housing.

To achieve this, in a suitable embodiment the fixation element comprises a first rail element on top thereof configured to slidingly engage with a second rail element provided on the bottom of the heat exchanger unit; while the housing comprises a third rail element configured to slidingly engage with a fourth rail element on top of the heat exchanger unit. This way, the heat exchanger unit is clamped between the top wall of the housing and the fixation element that is positioned on the bottom wall of the housing.

In view of the above, in a preferred embodiment, as seen from the point of insertion, the fixation element secures the first and second fans sideways in the housing and it secures the heat exchanger unit from bottom to top of the housing. It is however even more preferred that the heat exchanger unit is also secured sideways in the housing. To this end, in a preferred embodiment the housing comprises a fifth rail element configured to slidingly engage with a sixth rail element on a side of the heat exchanger unit and wherein the housing comprises a seventh rail element configured to slidingly engage with an eighth rail element on an opposite side of the heat exchanger unit.

In a preferred embodiment the heat exchanger unit has a substantially hexagonal circumferential shape in the direction orthogonal to the insertion direction, or in other words as seen from the front of the heat exchanger system. In this embodiment, the lower panel of the hexagonal heat exchanger unit may be placed on the fixation element on a top surface portion thereof.

For optimal fixation in a direction orthogonal to the direction of insertion and to allow taking the hexagonal heat exchanger unit in and out of the housing from the front of the heat exchanger system by a user, the fixation element may comprises a first rail element on top thereof configured to slidingly engage with a second rail element provided on the lower panel of the heat exchanger unit, as mentioned above.

The upper panel of the hexagonal heat exchanger unit may be placed against the wall of the housing vertically opposite to the fixation element. For optimal fixation in a direction orthogonal to the direction of insertion and to allow taking the hexagonal heat exchanger unit in and out the housing from the front of the heat exchanger system by a user, the housing may comprise a third rail element configured to slidingly engage with a fourth rail element on the upper panel of the heat exchanger unit, as mentioned above.

To further fixate the hexagonal heat exchanger unit sideways, i.e. in a direction orthogonal to the direction of insertion, and to allow sliding of the hexagonal heat exchanger unit in and out the housing from the front of the heat exchanger system by a user, the housing may comprise a fifth rail element configured to slidingly engage with a sixth rail element positioned on the edge bridging two side panels of the heat exchanger unit on one side thereof, while on the other hand the housing comprises a seventh rail element configured to slidingly engage with a eighth rail element on the edge bridging two side panels on an opposite side of the heat exchanger unit.

In view of the above, in a preferred embodiment the heat exchanger unit has a substantially hexagonal circumferential shape in the direction orthogonal to the insertion direction, wherein the fixation element comprises said first rail element on top thereof configured to slidingly engage with said second rail element provided on the lower panel of the heat exchanger unit; wherein the housing comprises said third rail element configured to slidingly engage with said fourth rail element on the upper panel of the heat exchanger unit; wherein the housing comprises said fifth rail element configured to slidingly engage with said sixth rail element positioned on the edge bridging two side panels of the heat exchanger unit on one side thereof; and wherein the housing comprises said seventh rail element configured to slidingly engage with said eighth rail element on the edge bridging two side panels on an opposite side of the heat exchanger unit.

To prevent undesired air flow between air flow channels, airtight seal elements are provided at suitable places. It in particular preferred that any engaging rail elements in the context of the present invention are provided with airtight seal elements, such as gaskets or strips of rubber or similar sealing materials and/or that airtight seal elements are provided along such rail elements on one or more sides thereof.

This way, in particular in regard of the hexagonal heat exchanger unit discussed above, the engaging rail elements on top, bottom and the sides, can divide the inside of the housing in four quarters, wherein a first quarter is configured as the part of the first air flow passage entering the heat exchanger unit, a second quarter is configured as the part of the first air flow passage exiting the heat exchanger unit. A third quarter in this regard is configured as the part of the second air flow passage entering the heat exchanger unit, a fourth quarter is configured as the part of the second air flow passage exiting the heat exchanger unit. In view of this, in a suitable embodiment the first and second fan of the heat exchanger system are suitably positioned sideways of the heat exchanger unit, and above or below the engaging rail elements on the sides thereof. In a very suitable embodiment, the first and second fan of the heat exchanger system are suitably positioned sideways of the heat exchanger unit and below the engaging rail elements on the sides thereof. For this purpose, the fixation element may be provided with recesses or guiding elements on the sides thereof for optimal guidance of air flow in or out the fans into or from the heat exchanger unit, respectively. The hexagonal circumferential configuration of the heat exchanger unit with the engaging rail elements on top, bottom and the sides in combination with airtight seal elements thus results in continuous first air and second flow passages through the heat exchanger system by simply sliding the heat exchanger unit into the heat exchanger system without the need for additional installation steps in respect of the passages, except for measures to close the front, for instance by placing a front panel to close the system.

In this regard, the heat exchanger system may also comprise a removable front cover configured to sealingly cover the front of the housing and to secure said fixation element and heat exchanger unit in their position. Such a front cover may be comprised of a single part or of multiple parts.

As regard to other components of the system, a heat exchanger system comprises air filters to ensure suitable air quality in the building in which the system is installed, and for purposes of efficiency of the ventilation system in which the heat exchanger system is included. In the context of the present invention it is therefore preferred that at least the first and second air flow passages are provided with one or more air filter element.

It is preferred that the filter elements can be easily and removably inserted through the cross-section of both said airs flow passages from the front of the heat exchanger system so that they can be easily installed and removed for maintenance. For this purpose, in a preferred embodiment the housing is configured such that between the housing and the outer surface of the heat exchanger unit a first slot is provided for slidingly accommodating a first filter element in relation to the first air flow passage and that between the housing and the outer surface of the heat exchanger unit a second slot is provided for slidingly accommodating a second filter element in relation to the second air flow passage. The first and second air flow passages in this case extend through respective wall portions of the housing where the respective first and second filter elements are accommodated. In particular, in the case of the hexagonal heat exchanger unit as discussed above, in a preferred that the top side panels of the heat exchanger unit form sides of the first and second slot of accommodating said first and second filter elements. The corresponding housing wall portions may be provided with recesses to create a slot between the housing wall and top side panels of the heat exchanger unit in which the filters may be fittingly positioned by sliding them into the heat exchanger system from the front side.

In general, in a heat exchanger system condensation water is produced by the heat exchanger unit. It is desirable to remove condensation water from the system. Therefore, the system suitably comprises provisions for drainage of condensation water. In a preferred embodiment the housing comprises one or more drainage element at its bottom and the fixation element comprises inclined portions configured to guide condensation water produced in relation to the heat exchanger unit to said one or more drainage element. The water dripping from the heat exchanger unit may this way easily be discharged simply by flowing down. In a preferred embodiment, the housing comprises a first drainage element on one side of the housing for draining condensation water produced in relation to the first air flow passage and a second drainage element on an opposite side of the heat exchanger unit for draining condensation water produced in relation to the second air flow passage. This way it irrelevant for drainage purposes whether the heat exchange system is installed as in a left-sided or right-sided ventilation system.

It is noted in this respect, that depending on the installation configuration plan, a building requires a left- or right-sided ventilation system. Because manufacturing specific left- or right-sided ventilation systems increases the scale of production and the size of stock to manage on the manufacturer, it is preferred that a heat exchange system is designed such that it may be used as a left- or right-sided system without the need to reconstruct or change the configuration of the system. The present heat exchanger system allows such configurations, because the flow direction between the first and second air flow passage may suitably be reversed by taking appropriate measures that allows for regulation of the direction of flow. For this purpose, the heat exchanger system may suitably comprise a controller configured for controlling the flow direction of the first and second air flow passage. This may be realized using suitable software. This way, the direction of flow of air inward or outward the building via the heat exchanger system in each air flow channel may be changed when desired.

In a preferred heat exchange system used in this context comprise a bypass in the air flow passage between the extract air connection and the exhaust air connection to allow the extract air to bypass the heat exchanger unit. In general this bypass functions as a means to provide natural air flow between the inside and outside of a building, basically similar to opening a window, albeit that its flow may be regulated and enhanced, preferably by using one of the abovementioned fans.

The heat exchanger system in the context of the present invention therefore preferably comprises at least a first bypass flow passage branching from the first air flow passage at a first position up or downstream of the heat exchanger unit and a second end debouching back into the first air flow passage at a second, opposite position of the heat exchanger unit. Such a bypass flow passage may suitably extend at the backside of the heat exchanger unit, on the outside of the housing accommodating the heat exchanger unit, fixation element and fans.

In order to provide optimal airflow from the bypass flow passage to the respective fan driving the air flow, the fixation element my contain a closed top surface portion that forms a wall part of the first bypass flow passage when inserted in the housing.

The first bypass flow passage is configured to bypass the heat exchanger unit. In principle, it is sufficient that the first bypass flow passage in the heat exchanger system just functions as a means to allow natural air flow between the inside and outside of a building, basically similar to opening a window in a building. Thus, in that respect it functions the same regardless of the orientation of installation of the heat exchanger system in the building. This contributes to easy installation of the heat exchanger system in a building.

The opening and closing of the first air flow passage and first bypass flow passage may be effected by any suitable element or combination of elements, including one or more valves. It is preferred that means for regulating flow via the first air flow passage through the heat exchanger unit and for regulation flow through the first bypass comprise one or more valve configured for opening and closing the first air flow passage as well as for opening and closing the first bypass flow passage. This can be done for instance by using a single valve pivoting around an axis and configured to close the first air flow passage in one position and to close the first bypass flow passage in a second position. This allows using a single control mechanism that only has to control the position of a single valve.

Likewise, controllers may be used to regulate flow through the flow channels of the system or to control any other parameters that require regulation.

It noted that although it is not required for purposes of the present invention, it is possible to provide also the second air flow passage with a second bypass flow passage with a first end branching from the second air flow passage at a first position up or downstream of the heat exchanger unit and a second end debouching back into the second air flow passage at a second, opposite position of the heat exchanger unit. This second bypass flow passage is also configured to bypass the heat exchanger unit. Such a configuration may allow for further regulation of flow parameters.

Likewise, any standard parts may be incorporated in the heat exchanger system. Such parts, including without limitation controllers, flow regulators, motors, displays etc., may be selected from ones that are in principle known and commercially available and their configuration may be designed in accordance with principles known to the person skilled in the art of heat exchanger systems.

### Detailed description of the drawings

The present invention will now be described with respect to particular embodiments and with reference to the appended drawings but the invention is not limited thereto. The drawings described are only schematic and are nonlimiting. The dimensions and the relative dimensions do not necessarily correspond to the actual situation when the invention is put to practice.

The figures show an exemplary embodiment of the heat exchanger system according to the invention.

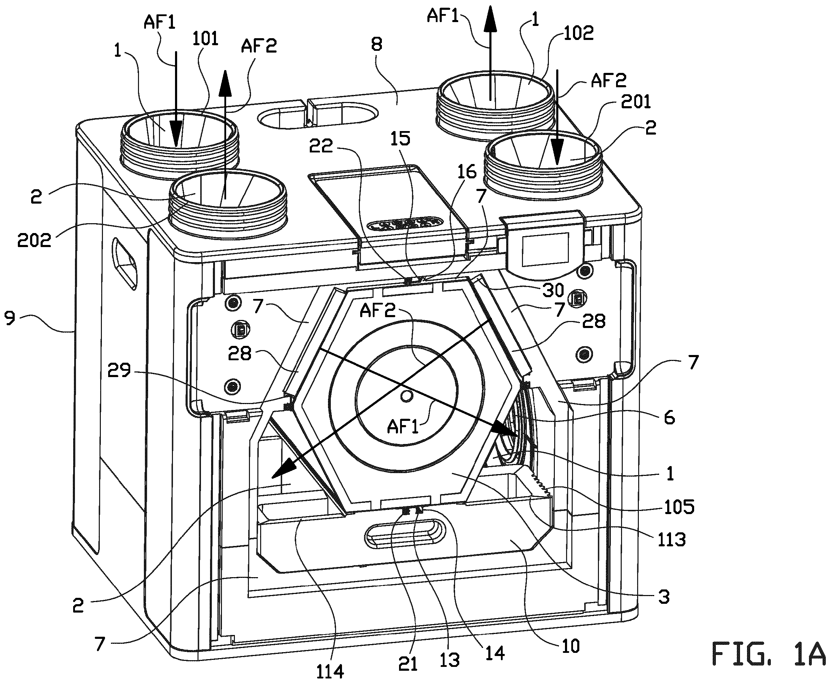

Herein, the heat exchanger system comprises a first air flow passage 1 having a first air connection 101 on one end of the first air flow passage 1 and a second air connection 102 on the other end of the first air flow passage 1. The heat exchanger system also has a second air flow passage 2 having a first air connection 201 on one end of the second air flow passage 2 and a second air connection 22 on the other end of the second air flow passage. Air flow directions are indicated with arrows. As can be seen best in Fig. 1A, which shows the heat exchanger system without front cover 11, 12, outside air enters first air flow passage 1 via air connection 101 and exits first air flow passage 1 via air connection 102 (arrows indicated with AF1). Indoor air enters the second air flow passage 2 via air connection 201 and exits the second air flow passage 2 via air connection 202 (arrows indicated with AF2).

The air connections 101, 102, 201, 202 suitably connect the heat exchanger system with the parts of a heat exchange ventilation system for use in a building or serve directly as inlet/outlet, depending on the design thereof.

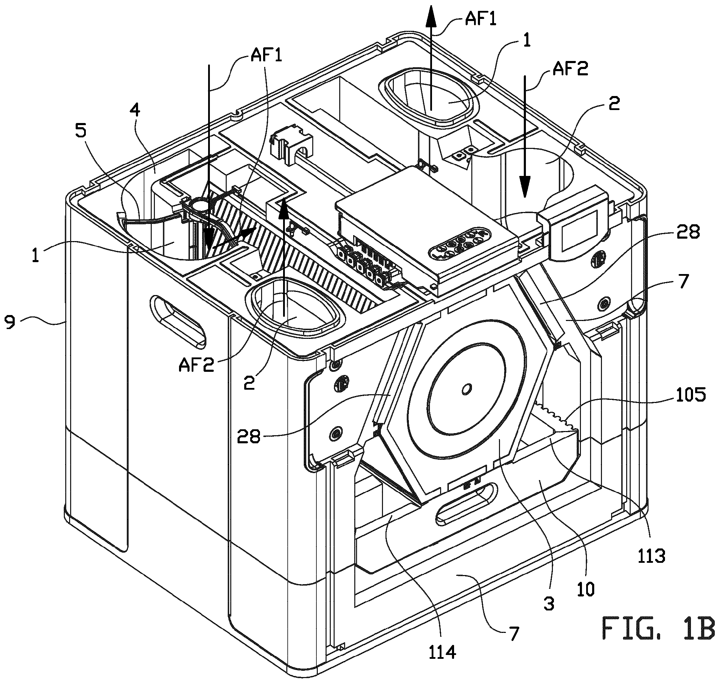

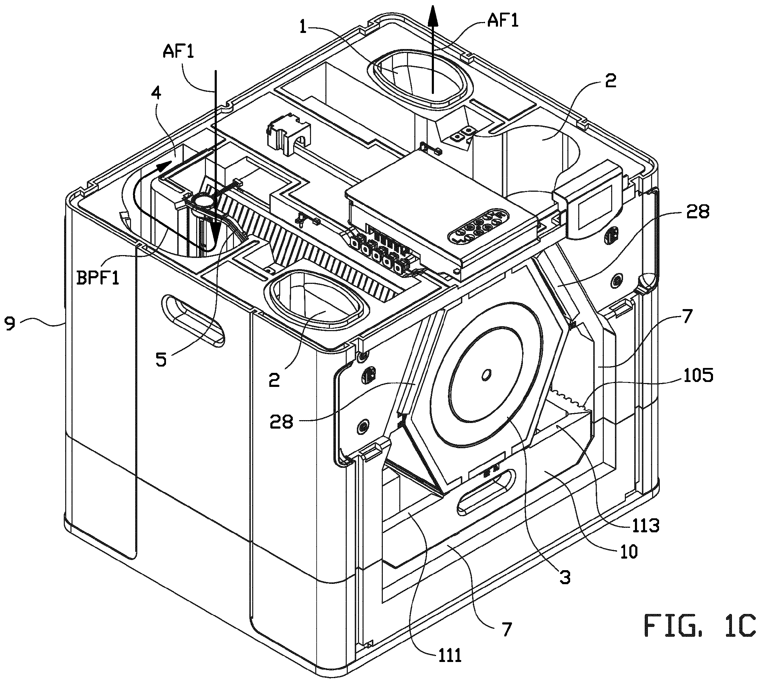

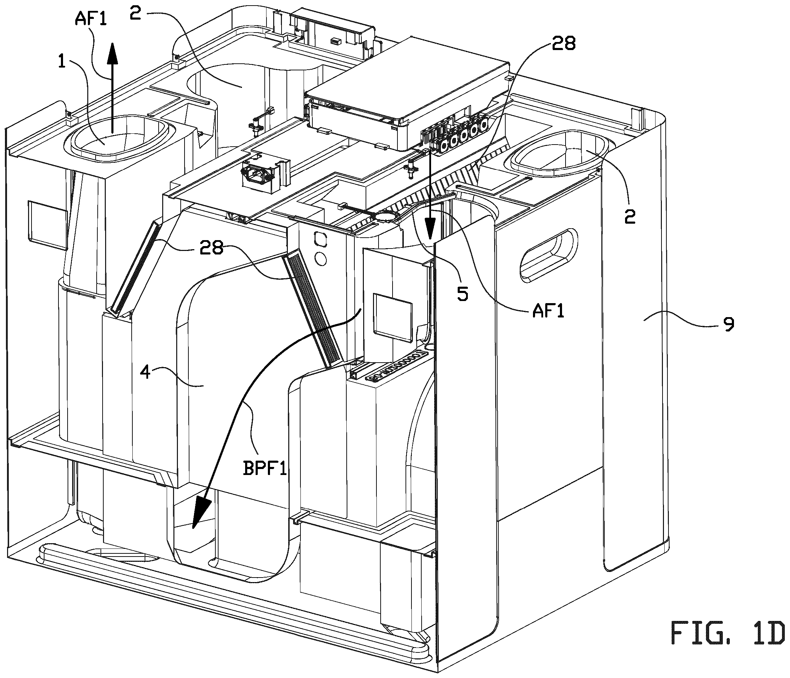

The heat exchanger system also comprises a heat exchanger unit 3 with a hexagonal circumference by means of which a part of the first air flow passage 1 and part of the second air flow passage 2 are in heat exchanging relationship with each other. This heat exchanger unit 3 is accommodated in inner housing 7. After passing the heat exchanger unit 3 in the first air flow passage 1 air enters fan 6, in this case a centrifugal fan, which is also accommodated in inner housing 7 and which sucks the air and passes it further into air flow passage 1 to exit via air connection 102. The other side around, after passing the heat exchanger unit 3 in the second air flow passage 2 air enters the second fan on the opposite side of the heat exchanger unit 3 which sucks the air and passes it further into air flow passage 2 to exit via air connection 202 (this fan is not shown in Fig. 1 and is incorporated in the inner housing 7 in a basically mirrored position with respect to the first fan 6).

The heat exchanger system also comprises a bypass flow passage 4 branching from the first air flow passage 1 at a first position upstream of the heat exchanger unit 3 and a debouching back into the first air flow passage 1 at a second, opposite position of the heat exchanger unit 3, so as to bypass the heat exchanger unit 3. The heat exchanger system is provided with means for regulating flow via the first air flow passage through the heat exchanger unit 3 and for regulation flow through the bypass flow passage. In the embodiment depicted the present exemplary embodiment the means for regulating flow via the first air flow passage 1 through the heat exchanger unit 3 and for regulation of flow through the bypass flow passage 4 comprises a valve 5 configured for opening and closing the first air flow passage 1 to or from the heat exchanger unit 3 as well as for opening and closing the bypass flow passage 4. Valve 5 is a single valve pivoting around an axis and configured to close the first air flow passage in one position and to close the bypass flow passage in a second position.

Fig. 1B, which shows the heat exchanger system without top cover 8 of outer housing 9 shows the direction of flow AF1 in case the bypass flow passage is closed with valve 5 so that air passes to the heat exchanger unit 3 via the first air flow passage 1. Fig. 1C, which also shows the heat exchanger system without top cover 8 of outer housing 9 shows the direction of flow BPF1 in case the bypass flow passage is open and the passage of first air flow passage 1 to or from the heat exchanger unit 3 is closed by valve 5. In that case flow AF1 is blocked in direction of the heat exchanger unit 3. The air in this case also enters the heat exchanger system via air connection 101 and exits via air connection 102 (in direction AF1) when it is returned in the first air flow passage at a point downstream of the heat exchanger unit 3. As shown in Fig. 1D which shows an opened view from the back of the heat exchanger system, in this embodiment the bypass flow passage 4 runs from the top of the system to the bottom of the system, bypassing heat exchanger unit 3 from the back, and returning at a point downstream of said heat exchanger unit 3 into the first air flow passage 1 again.

The heat exchanger unit 3 and said first and second fans 6 are secured in the inner housing 7 by a fixation element 10 in the form of a tray slidingly removable from a front side of the heat exchanger system, wherein the tray 10 is configured to secure said heat exchanger unit 3 in a suitable position on the tray 10 and the outer structure of the tray 10 is configured to secure the first and second fan 6 in their respective suitable positions in the inner housing 7.

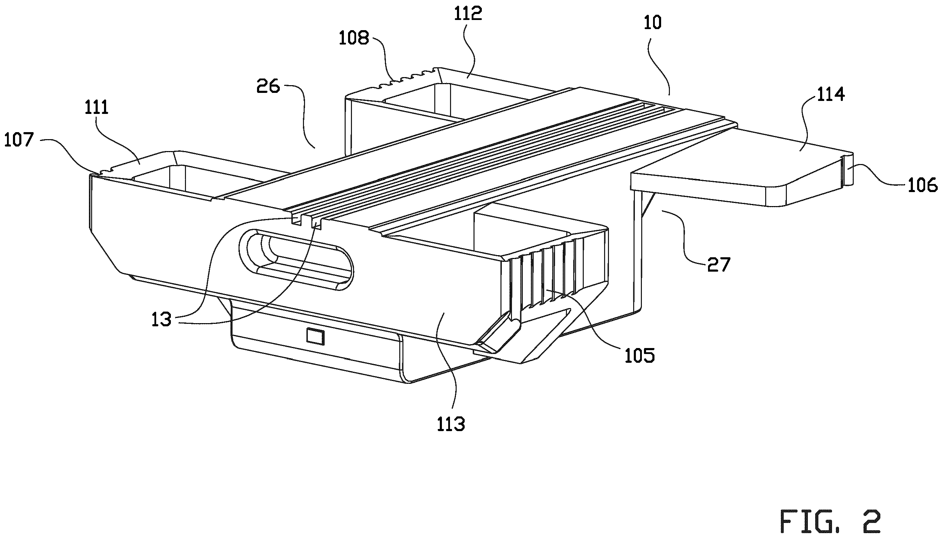

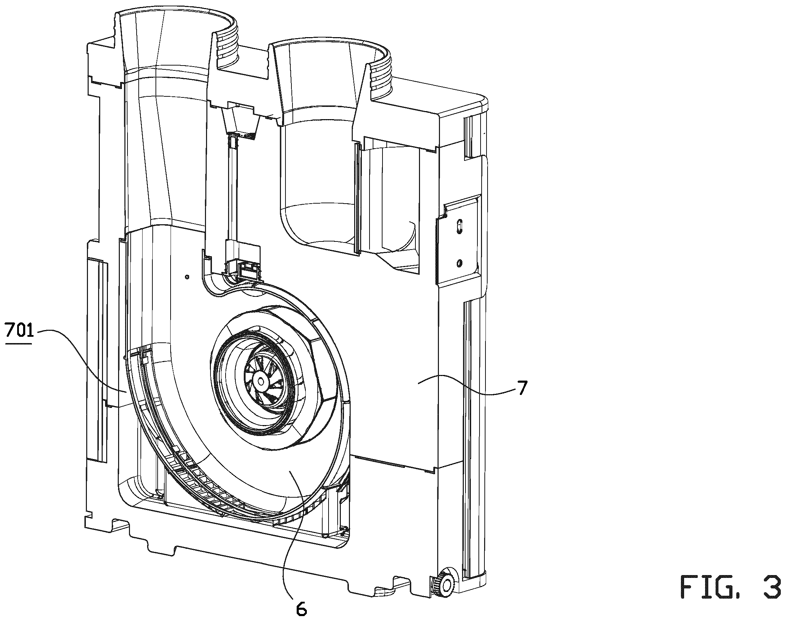

A detailed representation of this tray 10 is shown in Fig. 2. The outer structure of tray 10 is configured to secure the first and second fan 6 in their respective suitable positions in the inner housing 7 with its side portions 111, 112, 113 and 114. As can be seen in Fig. 3 the tray 10 clamps the fans 6 in their respective positions so that they are secured against movement towards the interior of the inner housing 7 or, when it is inserted, in direction of the heat exchanger unit 3.

In order to provide optimal airflow from the bypass flow passage 4 to the respective fan, the tray 10 contains a closed a top surface portion (side portion 114) that forms a wall part of the bypass flow passage 4 when inserted in the inner housing 7.

As can be seen best in Fig. 3, which shows a perspective view of a cross section through fan 6 and the wall of inner housing 7, the outer structure of the wall of the inner housing abutting the first and second fans 6 is structured such that it meets the dimensions of the first and second fans 6 so as to accommodate the first and second fans in a fixed position with regard to the direction from front to back of the heat exchanger system. In particular, the first and second fans 6 are positioned in recesses 701 provided in the inner housing 7 on opposite sides of the heat exchanger unit 3. This way the fans 6 are secured in their position in the direction from front to back of the heat exchanger system, and in particular of the inner housing 7, but they can be removed from the housing 7 for maintenance by taking them from the recesses when they are accessible, i.e. when the tray 10 and heat exchanger unit 3 are removed.

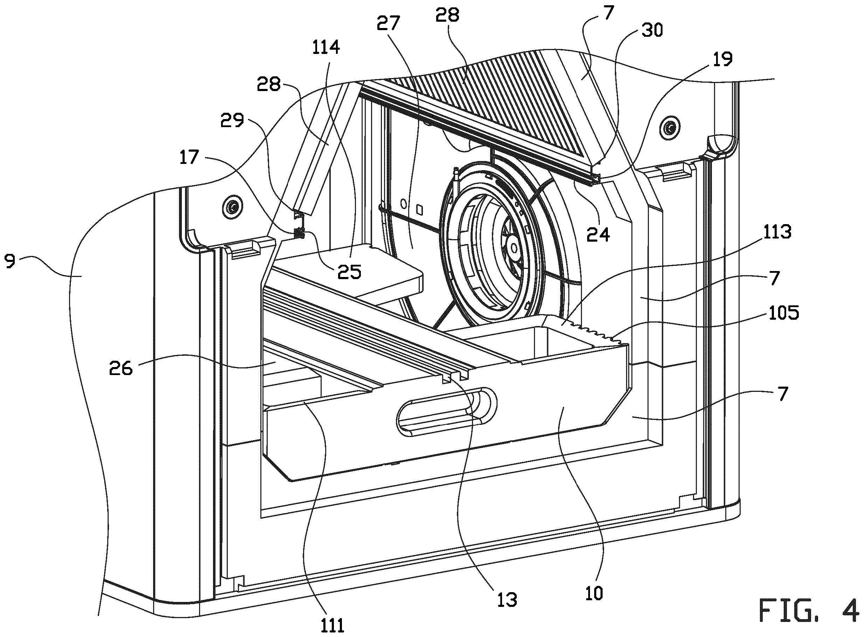

In order to provide further optimized fixation of the fans 6 in their respective positions, the tray 10 may be provided with recessed or protruded portions 105, 106, 107, 108 on the side portions 111-114 of the tray 10 in the direction in and out of the housing (as can best be seen in Fig.2 and 4). This provides some friction with the sides of the housing 7 and fans 6 so that a user needs to exert some pressure to slide the tray 10 in and out of the housing. Likewise, it may be preferred that the first and second fans comprise recessed or protruded portions configured to engage with the respective recessed or protruded portions of the tray 10.

The tray 10 is also configured such that said heat exchanger unit 3 is secured in the inner housing 7 by fix-ating it in a suitable position on the tray 10. In particular, the tray 10 is configured such that it fixates the heat exchanger unit 3 between the tray 10 and the top portion of the inner housing 7. To achieve this, in the present embodiment the tray comprises on an upper portion a first rail element 13 configured to slidingly engage with a second rail element 14 provided on the bottom panel of the heat exchanger unit 3. On the other hand, the housing comprises a third rail element 15 configured to slidingly engage with a fourth rail element 16 on the top panel of the heat exchanger unit. This way, the heat exchanger unit 3 is clamped between the top wall of the inner housing 7 and the tray that is positioned on the bottom wall of the inner housing 7.

In this embodiment the heat exchanger unit 3 is further secured sideways in the inner housing 7. For this purpose, the housing comprises a fifth rail element 17 configured to slidingly engage with a sixth rail element 18 on a side of the heat exchanger unit 3 and wherein the inner housing 7 comprises a seventh rail element 19 configured to slidingly engage with an eighth rail element 20 on an opposite side of the heat exchanger unit 3.

As shown in the present embodiment of the heat exchanger unit 3 has a substantially hexagonal circumferential shape in the direction orthogonal to the insertion direction, or in other words as seen from the front of the heat exchanger system. Herein, the lower panel of this hexagonal heat exchanger unit 3 is be placed on the tray 10 on a top surface portion thereof. The upper panel of the hexagonal heat exchanger unit 3 is placed abutting the wall of the inner housing 7 vertically opposite to the tray.

To prevent undesired air flow between air flow channels, airtight seal elements are provided, such as gaskets or strips of rubber 21, 22, 23, 24.

This way, in particular in regard of the hexagonal shape of the heat exchanger unit 3, the engaging rail elements 13-20 and sealing elements 21-24 on top, bottom and the sides, divide the inside of the inner housing 7 in four quarters, wherein a first quarter functions as the part of the first air flow passage 1 entering the heat exchanger unit 3, a second quarter functions as the part of the first air flow passage 1 exiting the heat exchanger unit 3. A third quarter in this regard functions as the part of the second air flow passage 2 entering the heat exchanger unit 3, and a fourth quarter functions as the part of the second air flow passage 2 exiting the heat exchanger unit.

The first and second fan 6 of are suitably positioned sideways of the heat exchanger unit 3, and below the engaging rail elements (17 and 18) and (19 and 20) on the sides. The tray 10 may be provided with recesses 26, 27 on the sides thereof (for optimal guidance of air flow in or out the fans into or from the heat exchanger unit 3, respectively. The hexagonal circumferential configuration of the heat exchanger 3 in combination with the engaging rail elements 13-20 and sealing elements 21-24 on top, bottom and the sides thus result in continuous first air and second flow passages 1, 2 through the heat exchanger system by simply sliding the heat exchanger unit 3 into the heat exchanger system without the need for additional installation steps in regard of the passages.

To ensure suitable air quality in the building in which the system is installed the first and second air flow passages 1, 2 and bypass flow passage 4 are provided with air filter elements 28. Filter elements 28 can be easily and removably inserted through the cross-section of the flow passages from the front of the heat exchanger system so that they can be easily installed and removed for maintenance. For this purpose, in a preferred embodiment the inner housing 7 is configured such that between the inner housing 7 and the outer surface of the heat exchanger unit 3 a first slot is provided for slidingly accommodating a first filter element 28 in relation to the first air flow passage 1 and that between the inner housing 7 and the outer surface of the heat exchanger unit 3 a second slot is provided for slidingly accommodating a second filter element 28 in relation to the second air flow passage 2. The first and second air flow passages 1,2 in this case extend through respective wall portions of the inner housing 3 where the respective first and second filter elements 28 are accommodated. In particular the top side panels of the heat exchanger unit 3 form sides of the first and second slot of accommodating said first and second filter elements. The corresponding housing wall portions may be provided with recesses 29, 30 to create a slot between the housing wall 7 and top side panels of the heat exchanger unit 3 in which the filters 28 may be fittingly positioned by sliding them into the heat exchanger system from the front.

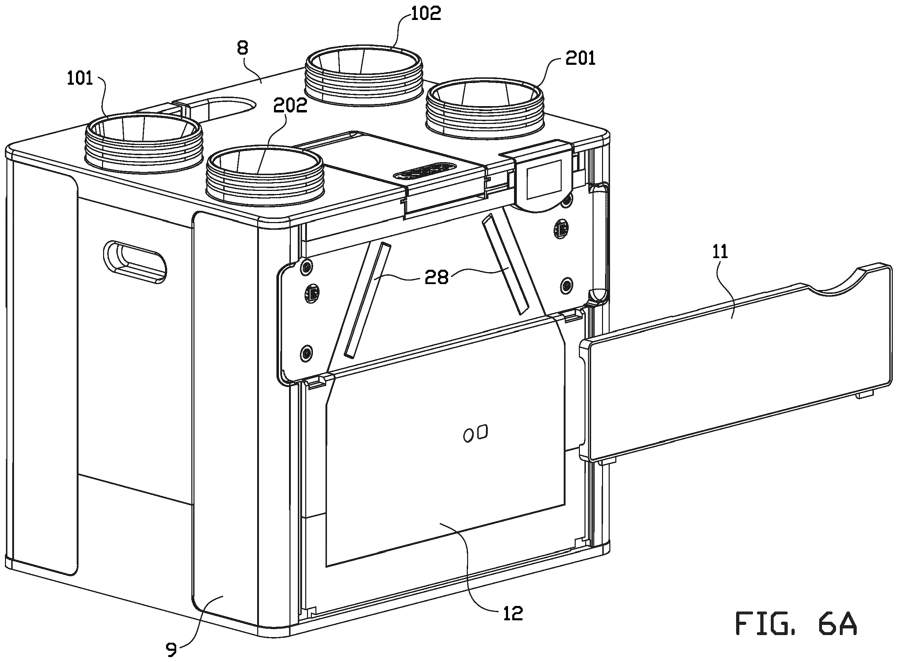

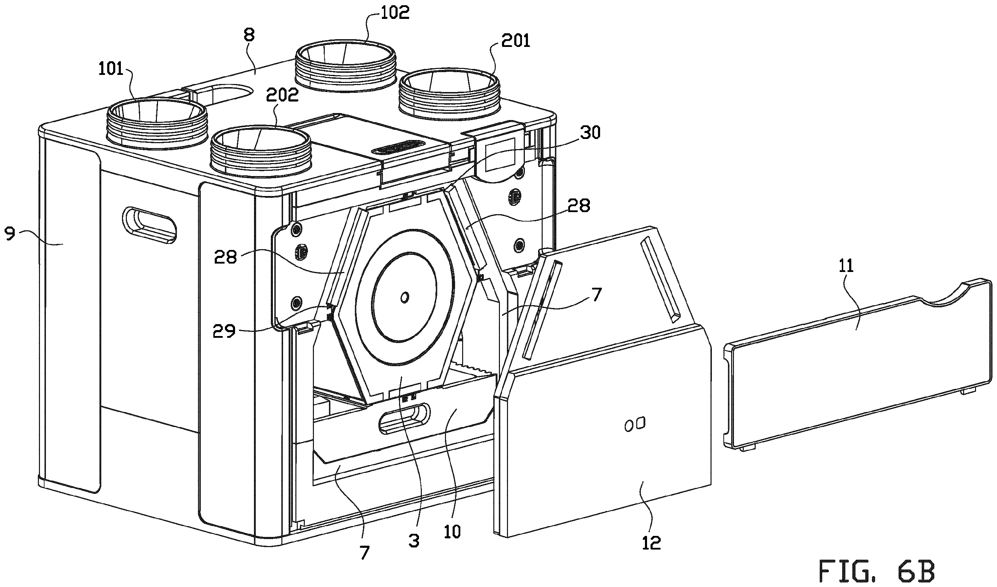

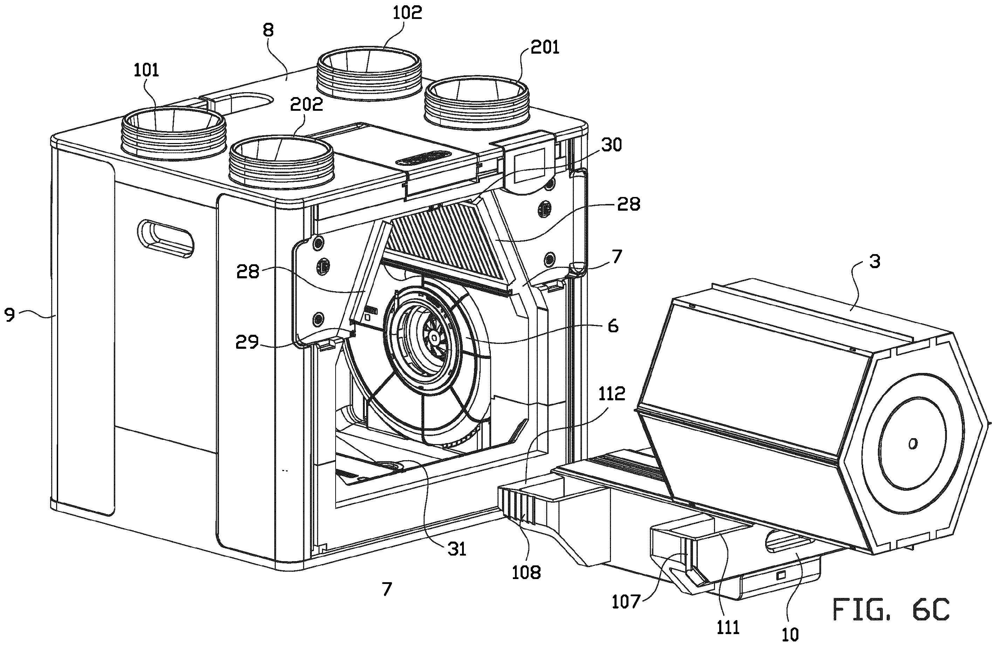

The system in the present embodiment comprises provisions for drainage of condensation water. As shown in Fig. 6, the inner housing 7 comprises a first drainage element 31 on one side of the housing for draining condensation water produced in relation to the first air flow passage and a second drainage element (not shown) on an opposite side of the heat exchanger unit 3 for draining condensation water produced in relation to the second air flow passage. The tray comprises inclined portions 32 configured to guide condensation water produced in relation to the heat exchanger unit 3 to said one or more drainage element.

Fig. 6 A-C show how the tray 10 allows that the filter units and ventilation fans 6 comprised in the heat exchanger system can be installed and replaced in a very easy manner, so that maintenance can be performed without extensive knowledge of the system. For this purpose, a first part 11 of a removable front cover may be removed from the front to make the filter elements 28 accessible from the front (Fig. 6A). Removal of the second part 12 of the removable front cover makes the tray 10 and heat exchanger unit 3 accessible (Fig. 6B). Now the tray 10 and heat exchanger unit 3 can be slid out of the housing 7 (Fig. 6C). The fans 6 can now be reached without a problem and be removed for maintenance.

## Claims

1. A heat exchanger system, comprising a housing comprising accommodated therein:
a heat exchanger unit installed at a crossing point of a first and second air flow passage which both have an air inlet and air outlet and which are configured in such a relation with the heat exchanger unit that the first and second air flow passage are in a heat exchanging relation with each other;
a first fan for effecting air flow through the first air flow passage;
a second fan for effecting air flow through the second air flow passage;
wherein said heat exchanger unit and said first and second fans are secured in the housing by a fixation element in the form of a tray slidingly removable from a front side of the heat exchanger system, wherein the tray is configured to secure said heat exchanger unit in a suitable position on the tray and the outer structure of the tray is configured to secure the first and second fan in their respective suitable positions in the housing.

2. The heat exchanger system according to claim 1 wherein the outer structure of the wall of the housing abutting the first and second fans is structured such that it meets the dimensions of the first and second fans so as to accommodate the first and second fans in a fixed position with regard to the direction from front to back of the heat exchanger system.

3. The heat exchanger system according to claim 2, wherein the first and second fans are positioned in recesses provided in the housing on opposite sides of the heat exchanger unit, in particular wherein said first and second fans are centrifugal fans.

4. The heat exchanger system according to any of the previous claims,
wherein the fixation element comprises a first rail element on top thereof configured to slidingly engage with a second rail element provided on the bottom of the heat exchanger unit; and
wherein the housing comprises a third rail element configured to slidingly engage with a fourth rail element on top of the heat exchanger unit.

5. The heat exchanger system according to any of the previous claims, wherein the housing comprises a fifth rail element configured to slidingly engage with a sixth rail element on a side of the heat exchanger unit and wherein the housing comprises a seventh rail element configured to slidingly engage with an eighth rail element on an opposite side of the heat exchanger unit.

6. The heat exchanger system according to claim 4 or 5, wherein the engaging rail elements are provided with airtight seal element and/or that air tight seal elements are provided along said engaging rail elements.

7. The heat exchanger system according to any of the previous claims,
wherein the housing comprises one or more drainage element at its bottom and the fixation element comprises inclined portions configured to guide condensation water produced in relation to the heat exchanger unit to said one or more drainage element.

8. The heat exchanger system according to claim 7, wherein said housing comprises a first drainage element on one side of the housing for draining condensation water produced in relation to the first air flow passage and a second drainage element on an opposite side of the heat exchanger unit for draining condensation water produced in relation to the second air flow passage.

9. The heat exchanger system according to any of the previous claims wherein the first and second fans comprise recessed or protruded portions configured to engage with respective recessed or protruded portions on the sides of the fixation element.

10. The heat exchanger system according to any of the previous claims, wherein the housing and fixation element are made of expanded polypropylene (EPP).

11. The heat exchanger system according to any of the previous claims, wherein an inner wall portion of the housing is configured such that between the housing and the outer surface of the heat exchanger unit a first slot is provided for slidingly accommodating a first filter element in relation to the first air flow passage and that between the housing and the outer surface of the heat exchanger unit a second slot is provided for slidingly accommodating a second filter element in relation to the second air flow passage.

12. The heat exchanger system according to any of the previous claims wherein the heat exchanger unit has a substantially hexagonal circumferential shape in the direction orthogonal to the insertion direction and wherein
wherein the fixation element comprises said first rail element on top thereof configured to slidingly engage with said second rail element provided on the lower panel of the heat exchanger unit;
wherein the housing comprises said third rail element configured to slidingly engage with said fourth rail element on the upper panel of the heat exchanger unit;
wherein the housing comprises said fifth rail element configured to slidingly engage with said sixth rail element positioned on the edge bridging two side panels of the heat exchanger unit on one side thereof;
and wherein the housing comprises said seventh rail element configured to slidingly engage with said eighth rail element on the edge bridging two side panels on an opposite side of the heat exchanger unit.

13. The heat exchanger system according to claim 12, wherein the top side panels of the heat exchanger unit form sides of the first and second slot of accommodating said first and second filter elements.

14. The heat exchanger system according to any of the previous claims, comprising a first bypass flow passage branching from the first air flow passage at a first position up or downstream of the heat exchanger unit and a second end debouching back into the first air flow passage at a second, opposite position of the heat exchanger unit; wherein said fixation element contains a closed top surface portion that forms a wall part of the first bypass flow passage when inserted in the housing.

15. The heat exchanger system according to any of the previous claims, comprising a removable front cover configured to sealingly cover the front of the housing and to secure said fixation element and heat exchanger unit in their position.

## Amended claims

### Amended claims in accordance with Rule 137(2) EPC.

1. A heat exchanger system, comprising a housing (7) comprising accommodated therein:
a heat exchanger unit (3) installed at a crossing point of a first and second air flow passage (1, 2) which both have an air inlet (101, 102, 201, 202) and air outlet (101, 102, 201, 202) and which are configured in such a relation with the heat exchanger unit (3) that the first and second air flow passage (1, 2) are in a heat exchanging relation with each other;
a first fan (6) for effecting air flow through the first air flow passage (1);
a second fan for effecting air flow through the second air flow passage (2);
**characterized in that** said heat exchanger unit (3) and said first and second fans (6) are secured in the housing (7) by a fixation element (10) in the form of a tray slidingly removable from a front side of the heat exchanger system, wherein the tray (10) is configured to secure said heat exchanger unit (3) in a suitable position on the tray (10) and the outer structure of the tray (10) is configured to secure the first and second fan (6) in their respective suitable positions in the housing (7).

2. The heat exchanger system according to claim 1 wherein the outer structure of the wall of the housing (7) abutting the first and second fans (6) is structured such that it meets the dimensions of the first and second fans (6) so as to accommodate the first and second fans (6) in a fixed position with regard to the direction from front to back of the heat exchanger system.

3. The heat exchanger system according to claim 2, wherein the first and second fans (6) are positioned in recesses (701) provided in the housing (7) on opposite sides of the heat exchanger unit (3), in particular wherein said first and second fans (6) are centrifugal fans.

4. The heat exchanger system according to any of the previous claims,
wherein the fixation element (10) comprises a first rail element (13) on top thereof configured to slidingly engage with a second rail element (14) provided on the bottom of the heat exchanger unit (3); and
wherein the housing (7) comprises a third rail element (15) configured to slidingly engage with a fourth rail element (16) on top of the heat exchanger unit (3).

5. The heat exchanger system according to any of the previous claims, wherein the housing (7) comprises a fifth rail element (17) configured to slidingly engage with a sixth rail element (18) on a side of the heat exchanger unit (3) and wherein the housing (7) comprises a seventh rail element (19) configured to slidingly engage with an eighth rail element (20) on an opposite side of the heat exchanger unit (3).

6. The heat exchanger system according to claim 4 or 5, wherein the engaging rail elements (13-20) are provided with airtight seal elements (21, 22, 23, 24) and/or that air tight seal elements (21, 22, 23, 24) are provided along said engaging rail elements (13-20).

7. The heat exchanger system according to any of the claims 4, 5 and 6, wherein the heat exchanger unit (3) has a substantially hexagonal circumferential shape in the direction orthogonal to the insertion direction and wherein
wherein the fixation element (10) comprises said first rail element (13) on top thereof configured to slidingly engage with said second rail element (14) provided on the lower panel of the heat exchanger unit (3);
wherein the housing (7) comprises said third rail element (15) configured to slidingly engage with said fourth rail element (16) on the upper panel of the heat exchanger unit (3);
wherein the housing (7) comprises said fifth rail element (17) configured to slidingly engage with said sixth rail element (18) positioned on the edge bridging two side panels of the heat exchanger unit (3) on one side thereof;
and wherein the housing (7) comprises said seventh rail element (19) configured to slidingly engage with said eighth rail element (20) on the edge bridging two side panels on an opposite side of the heat exchanger unit (3).

8. The heat exchanger system according to any of the previous claims,
wherein the housing (7) comprises one or more drainage element (31) at its bottom and the fixation element (10) comprises inclined portions (32) configured to guide condensation water produced in relation to the heat exchanger unit (3) to said one or more drainage element (31).

9. The heat exchanger system according to claim 8, wherein said housing (7) comprises a first drainage element (31) on one side of the housing (7) for draining condensation water produced in relation to the first air flow passage (1) and a second drainage element on an opposite side of the heat exchanger unit (3) for draining condensation water produced in relation to the second air flow passage (2).

10. The heat exchanger system according to any of the previous claims wherein the first and second fans (6) comprise recessed or protruded portions configured to engage with respective recessed or protruded portions (105, 106, 107, 108) on the sides (111, 112, 113, 114) of the fixation element (10).

11. The heat exchanger system according to any of the previous claims, wherein the housing (7) and fixation element (10) are made of expanded polypropylene (EPP).

12. The heat exchanger system according to any of the previous claims, wherein an inner wall portion of the housing (7) is configured such that between the housing (7) and the outer surface of the heat exchanger unit (3) a first slot is provided for slidingly accommodating a first filter element (28) in relation to the first air flow passage (1) and that between the housing (7) and the outer surface of the heat exchanger unit (3) a second slot is provided for slidingly accommodating a second filter element (28) in relation to the second air flow passage (2) .

13. The heat exchanger system according to claim 7, wherein the top side panels of the heat exchanger unit (3) form sides of the first and second slot of accommodating said first and second filter elements (28).

14. The heat exchanger system according to any of the previous claims, comprising a first bypass flow passage (4) branching from the first air flow passage (1) at a first position up or downstream of the heat exchanger unit (3) and a second end debouching back into the first air flow passage (1) at a second, opposite position of the heat exchanger unit (3); wherein said fixation element (10) contains a closed top surface portion that forms a wall part of the first bypass flow passage (4) when inserted in the housing (7).

15. The heat exchanger system according to any of the previous claims, comprising a removable front cover (11, 12) configured to sealingly cover the front of the housing (7) and to secure said fixation element (10) and heat exchanger unit (3) in their position.
